# EUROPEAN PATENT APPLICATION

(11) **EP 2 565 937 A1**
(43) Date of publication of application: **06.03.2013**
(21) Application number: 11790848.3
(22) Date of filing: 12.04.2011
(51) Int. Cl.: H01L 31/042, H01L 31/18

(54) **INSTALLATION COMPONENT FOR SOLAR CELL BOARD**

(30) Priority: 08.04.2011 CN 201110088497
(71) Applicant: Dongguan Anwell Digital Machinery Co., Ltd., Guangdong 523080 (CN)
(72) Inventor: YE, Michael, Guangdong 523080 (CN); FAN, Kaileung, Guangdong 523080 (CN)
(74) Representative: Meyer, Thorsten
(86) International application number: PCT/CN2011/072659
(87) International publication number: WO 2012/136008

(57) **Abstract**

A mounting assembly (1) for a solar panel, comprising beams (10), pressing blocks (30) and a plurality of anti-slip blocks (40), said beams (10) are paralleled and transversely fixed to installation part outdoors, and the upper portion of said beam (10) is provided with a long groove (101) along the longitudinal direction of the beam, and the opposing side walls of said long groove (101) extended to said groove (101) to form a supporting portion (102), one end of said anti-slip block (30) is slidably inserted into said long groove (101), the other end of said anti-slip block (30) is loaded on said supporting portion (102) and is fixed to the back of said solar panel, and said pressing block (20) is pushed and pressed on the side edge of said solar panel and is fixed to said beam (10). The installation of solar panel can be realized by inserting the anti-slip block (30) in the back of solar panel into the long groove (101) of beam (10), the operation is easy and can bring amazing stability; furthermore, spare of the setting of strengthened rib with great span disposed on the solar panel, only if the use of beam (10) and anti-slip block (40) with small volume, further simplifying the mounting structure and saving material, so as to reduce the cost of human source and material. Besides, a method for assembling solar panel is disclosed in the present invention.

## Description

### FIELD OF THE INVENTION

The present invention relates to a mounting assembly for a solar panel, more particularly, to a mounting assembly for a borderless solar panel with amorphous crystalline silicone.

### BACKGROUND OF THE INVENTION

With the coal, oil and other non-renewable fuel on the decrease, the issue of energy is gradually becoming prominent factor of restricting economic development. To search the new impetus for economic development, the countries and the amount increasing commence to execute the project of Solar Beam Plan which is developing renewable solar energy, as well as some high level nuclear research institute in European. Under the promotion of huge potential from the international photovoltaic market, the solar cells manufacturing in globe are positively and decisively investing a great deal of capital and expanding production scale for seizing the market. In the long run, with the improvement of manufacturing technology of solar cells and the development of new technology of photoelectric convert, along with environmental protection and renewable clean energy on great demand in globe, the solar cells has still been the better way for utilizing solar radiation energy in practice, and provide a good outlook for expanding in scale in future.

In recent years, the domestic solar kit has become more and more popular. The layout of domestic solar kit is mainly at the place of facing the sun in the private building, and the solar panel is usually mounted onto the installation part outdoors by means of assembling support. There are different methods for assembling solar panel according to the unique self-structure of solar panel. With regard to the configuration of solar panel such as thin film, single-crystalline silicone and multi-crystalline silicone, it can be distinguished to two types of solar panel with border and borderless solar panel; (1) for solar panel with border, the common assembling method which is the fixing of solar panel and assembling support by the fit of the bolt and the fixing hole defined on the border thereof, so as to realize the solar panel mounting to the outdoor, and this method is adopted extensively by China and other countries presently; another assembling method which is the pressing block to be abutted to the border, and the pressing block is disposed on the assembling support, so as to realize the solar panel mounting to the outdoor, and this method is adopted extensively by EU, US and other counties presently; (2) for the borderless solar panel , the common assembling method can be substantially separated to two types. The first type which is the pressing block with rubber pad is set on mounting support through the attaching the rubber pad of pressing block to the solar panel directly, so as to realize the solar panel mounting to the outdoor. The second one which is the strengthened rib to be set on the back of solar panel, so as to realize the solar panel mounting to the outdoor.

Engaging in research and practice of the installing method of solar panel for a long time, it is found that the defects existing in the above said installing method of solar panel, the detail as below: For assembling the solar panel with border, as the periphery of solar panel shall be provided with border used for assembling additionally, causing the assemblage being complicated and troublesome, as well as adding the material, so as to increase the cost of human source and material; for assembling the borderless solar panel , spare of setting for the border used for assembling disposed on the periphery of solar panel, reducing the material, but the attaching for the periphery of solar panel only relying on pressing block with rubber pad, if the solar panel is in a big size or encountering strong snow and wind and other harsh and forcible weather, the resistance of solar panel for the harsh and forcible weather may not be borne in a long time if only counting on the attaching for pressing block therein; for assembling the solar panel by providing strengthened rib to the back thereof, though the solar panel can be fixed stably in a long time, as this method realized shall increase the strengthened rib with great span onto the back of solar panel at different location, bringing about the appearance of defects as similar as the method for setting border, then causing the assemblage being complicated and troublesome, as well as adding the material, so as to increase the cost of human source and material.

So, it is necessary to provide a mounting assembly for a solar panel with simple structure, convenient operation and low cost to solve the defects existing in the prior art.

### SUMMARY OF THE INVENTION

One objective of the present invention is to provide a mounting assembly for a solar panel with simple structure, convenient operation and low cost.

Another objective of the present invention is to provide an easy method for assembling solar panel.

The present invention is realized by the following technical scheme which is to provide a mounting assembly for a solar panel, which is adapted for fixing a borderless solar panel outdoors, comprising beams, pressing blocks and anti-slip blocks, wherein said beams are paralleled and transversely fixed to the installation part outdoors, and the upper portion of said beam is provided with a long groove along the longitudinal direction of the beam to provide one end of an anti-slip block inserting and sliding therein, and the opposing side walls of said long groove extended to said groove to form a supporting portion, one end of said anti-slip block is slidably inserted into said long groove, and the other end of said anti-slip block is loaded on said supporting portion and is fixed to the back of said solar panel, and said pressing block is pushed and pressed on the side edge of said solar panel and is fixed to said beam.

In the preferred embodiment of the present invention, the lower portion of the back of said solar panel is provided with at least a group of the anti-slip blocks which have the same distance from the lower edge of said solar panel, and at least two of paralleled anti-slip blocks with the same distance away from the lower edge form one group, by inserting the anti-slip block at the lower portion of solar panel into the long groove of beam, further mounting the solar panel to the beam in order to prevent the solar panel from sliding downward, moreover, the mounting site between solar panel and beam can be adjusted by multi-groups of anti-slip blocks defined.

In the preferred embodiment of the present invention, the upper portion of the back of said solar panel is provided with at least a group of the anti-slip blocks which have the same distance from the upper edge of said solar panel, and at least two of paralleled anti-slip blocks with the same distance away from the upper edge form one group, the way of setting anti-slip block at the both of the upper portion and lower portion of solar panel in which is suitable for the installation of solar panel with big size.

In the preferred embodiment of the present invention, said anti-slip block is provided with a bonding portion which is extended from one side to form a pressing portion, and said bonding portion is adhesively coupled with the back of said solar panel, said pressing portion is slidably inserted into long groove of said beam.

In the preferred embodiment of the present invention, said bonding portion of the anti-slip block is sticked on the back of said solar panel by means of adhesive tape or/and adhesives.

In the preferred embodiment of the present invention, said supporting portion of beam provided with rubber pad, said rubber pad is attached to said the supporting portion of said beam via adhesive tape or/and adhesive, said rubber pad is applied to buffer and fit solar panel.

In the preferred embodiment of the present invention, said pressing block has a pressing portion and a raised portion extended from one side of said pressing portion, and said raised portion has a sunk groove provided to retain said supporting portion of the beam, and said pressing portion is provided with a linking hole run through said raised portion, and said sunk groove of the raised portion is retainably connected to hold the supporting portion of said beam, and said pressing portion is pressed to a side edge of said solar panel, and said pressing block is connected to said beam through the fitting of a bolt and said linking hole.

In the preferred embodiment of the present invention, said mounting assembly further comprises a corner brace, and said corner brace has a linking portion, and said linking portion is bended and extended to form a fixing portion, said linking portion is fixed to said beam with dentate engagement, and said fixing portion is fixed to said installation part outdoors, the bonding strength between the beam and corner brace can be increased via dentate engagement.

In the preferred embodiment of the present invention, the material of said beam, pressing block, anti-slip block and corner brace is aluminium, and the beam and corner brace may be conducted matte aluminium anodization.

The present invention further provides a method for assembling solar panel with the mounting assembly, comprising:
(1) providing a plurality of anti-slip blocks and fixing said anti-slip blocks on the back of said solar panel in different position;
(2) providing a plurality of beams and fixing said beams on an installation part outdoors transversely and parallelly;
(3) inserting the anti-slip block which is adhered to said solar panel into the long groove of said beam for loading said solar panel on said beam;
(4) pressing and pushing a pressing block on the side edge of said solar panel and fixing said pressing block to said beam by screw; and
(5) repeating the above steps of (3)-(4) until finishing the installation of a plurality of solar panels.

Compared with the prior art, as the mounting assembly for a solar panel, comprising beams, pressing blocks and anti-slip blocks, said beams are paralleled and transversely fixed to the installation part outdoors, and the upper portion of said beam is provided with a long groove along the longitudinal direction of the beam, and the opposing side walls of said long groove extended to said groove to form a supporting portion, one end of said anti-slip block is slidably inserted into said long groove, the other end of said anti-slip block is loaded on said supporting portion and is fixed to the back of said solar panel, and said pressing block is pushed and pressed on the side edge of said solar panel and is fixed to said beam. The installation of solar panel can be realized by inserting the anti-slip blocks in the back of solar panel into the long groove of beam, the operation is easy and can bring amazing stability; furthermore, spare of the setting of strengthened rib with great span disposed on the solar panel, only if the use of beams and anti-slip blocks with small volume, further simplifying the mounting structure and saving material, so as to reduce the cost of human source and material.

### BRIEF DESCRIPTION OF THE DRAWINGS

Fig. 1 is a perspective view of a mounting assembly for a solar panel of the invention;
Fig. 2 is a exploded view of a mounting assembly for a solar panel of the invention;
Fig. 3 is a perspective view of a beam of a mounting assembly for a solar panel of the invention;
Fig. 4 is a left view of the beam of Fig. 3;
Fig. 5 is a perspective view of a pressing block of a mounting assembly for a solar panel of the invention;
Fig. 6 is a perspective view of an anti-slip block of a mounting assembly for a solar panel of the invention;
Fig. 7 is a perspective view of a corner brace of a mounting assembly for a solar panel of the invention;
Fig. 8 is a perspective view of a connecting strip of a mounting assembly for a solar panel of the invention;
Fig. 9 is a status view of beams of a mounting assembly for a solar panel of the invention;
Fig. 10 is an enlarged view of an embodiment of a mounting assembly for a solar panel of the invention;
Fig. 11 is an enlarged view of another embodiment of a mounting assembly for a solar panel of the invention;
Fig. 12 is a flow chart of a method for assembling a solar panel by use of a mounting assembly for a solar panel of the invention.

### DETAILED DESCRIPTION OF ILLUSTRATED EMBODIMENTS

Describing the specific embodiment of the invention with reference to accompanying drawing, the same element mark represents the same element in the accompanying drawing.

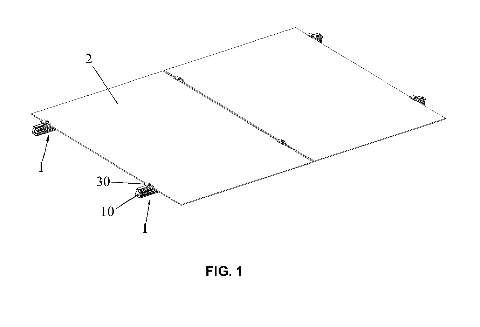

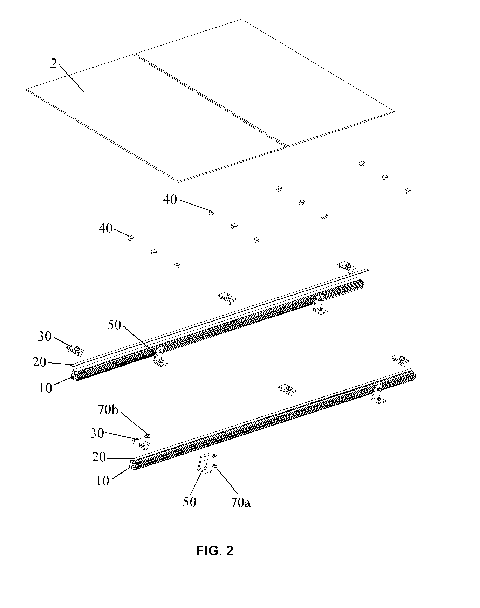

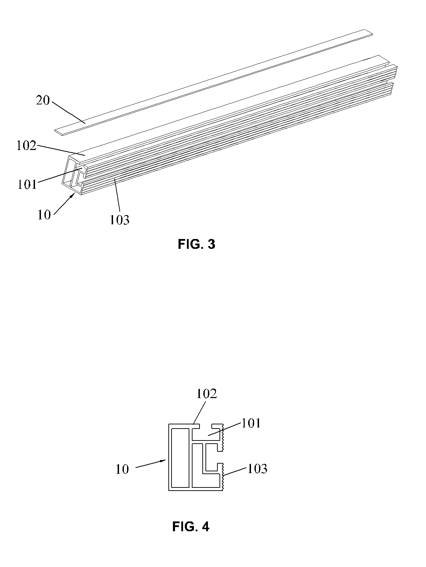

As illustrated in Fig. 1 to Fig. 4, a mounting assembly 1 for a solar panel of the invention, which is used for fixing a borderless solar panel 2 outdoors, comprising a beam 10, a rubber pad 20, a pressing block 30, an anti-slip block 40 and corner brace 50, wherein said beam 10 is paralleled and transversely fixed to installation part outside by corner brace 50, and the upper portion of said beam 10 is provided with a long groove 101 along the longitudinal direction of the beam 10 to provide one end of an anti-slip block 40 inserting and sliding therein, and the opposing side walls of said long groove 101 extended to said groove 101 to form a supporting portion 102, and the side 103 of beam 10 is provided with dentations, the rubber pad 20 attached to the supporting portion 102 of said beam 10 by means of adhesive tape or adhesive, as well as both of adhesive tape and adhesive to be used together, the rubber pad 20 is used to buffer and fit the solar panel 2; one end of said anti-slip block 40 is slidably inserted into said long groove 101, the other end of said anti-slip block 40 is loaded on said supporting portion 102 and is fixed to the back of said solar panel, and said pressing block is pushed and pressed on the side edge of said solar panel 2 and is fixed to said beam 10.

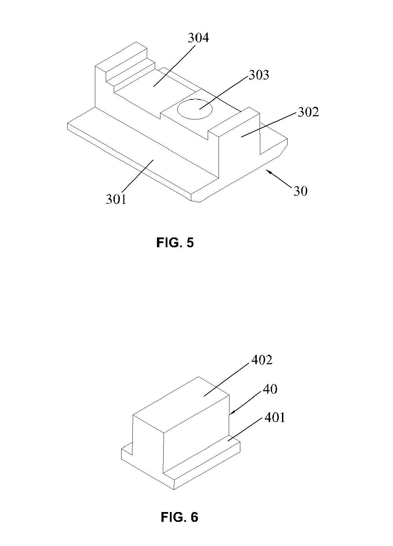

As illustrated in Fig. 5 to Fig. 7, said pressing block 30 has a pressing portion 301 and a raised portion 302 extended from one side of said pressing portion 301, and said pressing portion 301 is provided with a linking hole 303 run through said raised portion 302, and said raised portion 302 has a sunk groove 304 provided for the rubber pad 20 which is retained to the supporting portion 102 of beam 10, raised portion 302 is loaded onto the supporting portion 102 of said beam 10 in assembling, and the sunk groove 304 of said raised portion 302 is retained to the rubber pad 20, and said pressing portion 301 is pressed to a side edge of said solar panel 2, and said pressing block 30 is connected to said beam 10 through the fit of a bolt and said linking hole 303; the anti-slip block 40 is provided with a bonding portion 401 which is extended from one side to form a pressing portion 402, and said bonding portion 401 is adhesively coupled with the back of said solar panel 2, said pressing block 402 is slidably inserted into long groove 101 of said beam 10, preferably, said bonding portion 401 of anti-slip block 40 is sticked to the back of said solar panel 2 by means of adhesive tape or adhesive, as well as both of adhesive tape and adhesive to be used together; the corner brace 50 has a linking portion 501, and said linking portion 501 is bended and extended to form a fixing portion 502, said linking portion defines a fixing hole 501a, said fixing portion 502 defines a fixing hole 502a, and the back of said linking portion is provided with dentations, said linking portion 501 is fixed to said beam with dentate engagement, and fastening together by the fit of fixing hole 501a and screw, the dentate engagement increases the bonding strength between the beam 10 and the corner brace 50, and said fixing portion is fixed to said installation part outside by the fit of fixing hole 502a and screw; preferably, said beam 10, pressing block 30, anti-slip block 40 and corner brace 50 of the invention are aluminium material, and the beam 10 and corner brace 50 may be conducted matte aluminium anodization.

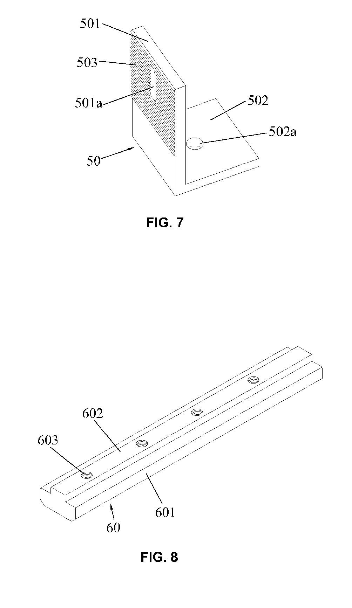

As illustrated in Fig. 8, the invention further provides a connecting strip 60, which is used for elongating and connecting the beam 10, the connecting strip 60 having substrate 601 which defines ledge 602 along the longitudinal direction thereof, the ledge 602 defines fixing hole 603 run through substrate 601, while elongating the beam 10, the connecting strip 60 is set into the opening at the side of beam 10, and the connecting strip 60 is protruded out of the side of beam 10, the substrate 601 is clipped into the opening at the side of beam 10, then the connecting strip 60 is clipped to beam 10 and slid to the attachable ends of two beams 10, next, the connecting strip 60 is connected with two beams 10 by the bolts, further the beam 10 can be readily elongated through the connecting strip 60 to assemble much more solar panels 2 according to the actual requirement.

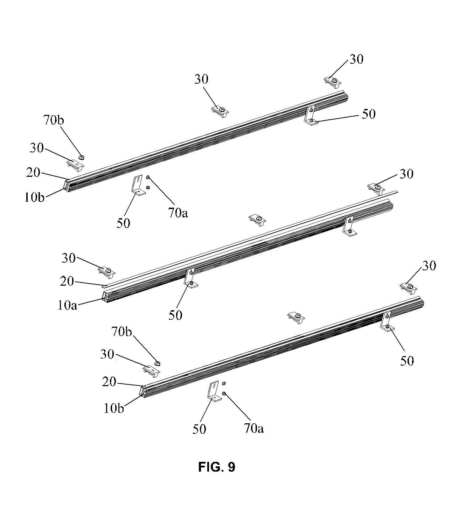

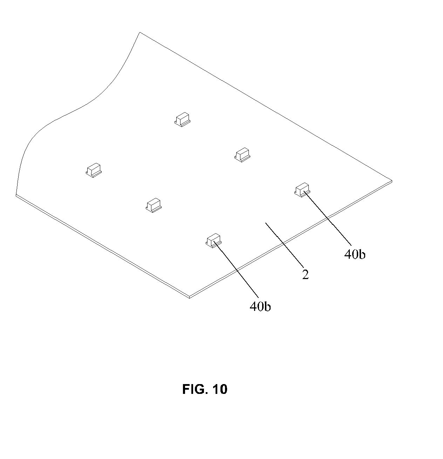

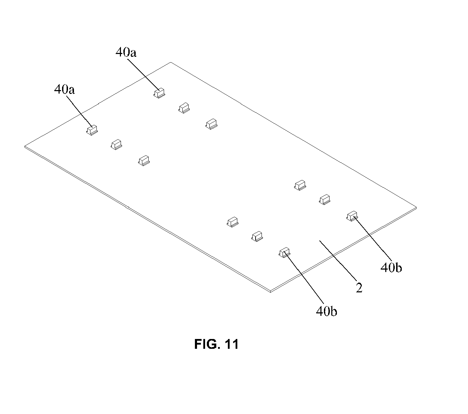

As illustrated in Fig. 9 to Fig. 11, describing the mounting status and different embodiment of solar panel 2 of the invention, take the example of the solar panel 2 mounted to the installation part outdoors with some slope to specify the detail. In this installation part, the beams 10b, 10a are horizontally disposed from down to up and paralleled mutually in order, in the adjacent beams 10a, 10b, the beam 10b located at the lower portion of installation part, the beam 10a located at the upper portion of installation part; the side 103 of beam 10a is engaged with the back 503 of linking portion 501 of corner brace 50, and fastening together by the fit of fixing hole 501a a and screw 70a, the fixing portion 502 of corner brace 50 is fixed to the installation part outdoors by the fit of fixing hole 502a and screw 70a; in the another embodiment of the invention, only if the lower portion of the back of said solar panel 2 is provided with at least a group of anti-slip blocks 40b in the same distance away from the lower edge thereof, and at least two anti-slip blocks 40b in the same distance away from the lower edge thereof and paralleled mutually are configured to one group, a preferable method of the embodiment provides three groups of anti-slip blocks 40b, each group contains two said anti-slip blocks 40b, while assembling the solar panel 2, by inserting any group of anti-slip blocks 40b of the lower portion of solar panel 2 into the long groove101 of beam 10, and the solar panel 2 is loaded onto the supporting portion of beams 10a, 10b, prompting the solar panel 2 is mounted to the beams 10a, 10b, the operation of inserting the anti-slip blocks 40b to the beam 10b can stop the solar panel 2 from sliding downward, the setting of three groups of anti-slip blocks 40b can adjust the mounting site between solar panel 2 and beam 10a, 10b, after mounting, the pressing block 30 is pushed and pressed to the side edge of said solar panel 2, and the pressing block 30 is mounted to the beam 10a, 10b by the fit of linking hole 303 and screw 70b, to achieve the stable joining in the solar panel 2; if the solar panel 2 is in a big size, which may be used the assembling method in the second embodiment of the invention, in this embodiment, the lower portion of the back of solar panel 2 is provided with three groups of anti-slip blocks 40b, as well as the upper portion of the back of solar panel 2 is provided with three groups of anti-slip blocks 40b in the same distance away from the upper edge thereof, and at least two anti-slip blocks 40b in the same distance away from the upper edge thereof and paralleled mutually are configured to one group, but it is to be understood that the method for setting three groups is not to be limited, the installation can be provided more groups of anti-slip blocks on the basis of actual need, in this way, the anti-slip blocks 40a, 40b of upper and lower portion of the back of solar panel 2 are respectively inserted into the long groove of the beam 10a, 10b, to achieve the installation of solar panel 2.

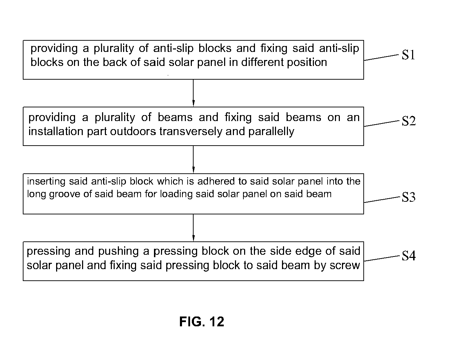

As illustrated in Fig. 12, the present invention further provides a method for assembling solar panel with mounting assembly, comprising:
(S1) preparing a plurality of anti-slip blocks and fixing said anti-slip blocsk on the back of said solar panel in different position;
(S2) preparing a plurality of beams and fixing said beams on an installation part outdoors transversely and parallelly;
(S3) inserting the anti-slip block which is adhered to said solar panel into the long groove of said beam for loading said solar panel on said beam;
(S4) pressing and pushing a pressing block on the side edge of said solar panel and fixing said pressing block to said beam by screw; and
(S5) repeating the above steps of (3)-(4) until finishing the installation of a plurality of solar panels.

As a mounting assembly 1 for a solar panel of the invention, comprising beams 10, pressing blocks 30 and a plurality of anti-slip blocks 40, said beams 10 are paralleled and transversely fixed to an installation part outdoors, and the upper portion of said beam 10 is provided with a long groove 101 along the longitudinal direction of the beam, and the opposing side walls of said long groove 101 extended to said groove 101 to form a supporting portion 102, one end of said anti-slip block 30 is slidably inserted into said long groove 101, the other end of said anti-slip block 30 is loaded on said supporting portion 102 and is fixed to the back of said solar panel, and said pressing block 20 is pushed and pressed on the side edge of said solar panel and is fixed to said beam 10. The installation of solar panel can be realized by inserting the anti-slip block 30 in the back of solar panel into the long groove 101 of beam 10, the operation is easy and can bring amazing stability; furthermore, spare of the setting of strengthened rib with great span disposed on the solar panel, only if the use of beam 10 and anti-slip block 40 with small volume, further simplifying the mounting structure and saving material, so as to reduce the cost of human source and material. Besides, a method for assembling solar panel is disclosed in the present invention.

The mounting assembly 1 for a solar panel of the invention is not limited to the installation of solar panel 2, besides, which may be applied to the installation of the similar kits in accordance to the actual need.

While the invention has been described in connection with what are presently considered to be the most practical and preferred embodiments, it is to be understood that the invention is not to be limited to the disclosed embodiments, but on the contrary, is intended to cover various modifications and equivalent arrangements included within the spirit and scope of the invention.

## Claims

1. A mounting assembly adapted for fixing a borderless solar panel outdoors, comprising:
beams;
pressing blocks; and
a plurality of anti-slip blocks,
wherein said beams are paralleled and transversely fixed to an installation part outdoors, and the upper portion of said beam is provided with a long groove along the longitudinal direction of the beam to provide one end of said anti-slip block inserting and sliding therein, and the opposing side walls of said long groove extended to said groove to form a supporting portion, one end of said anti-slip block is slidably inserted into said long groove, and the other end of said anti-slip block is loaded on said supporting portion and is fixed to the back of said solar panel, and said pressing block is pushed and pressed on the side edge of said solar panel and is fixed to said beam.

2. The mounting assembly of claim 1, wherein said anti-slip blocks are located on the lower portion of the back of said solar panel, and it is provided with at least a group of said anti-slip blocks which have the same distance away from the lower edge of said solar panel, and said one group of anti-slip blocks have at least two paralleled anti-slip blocks with the same distance away from the lower edge.

3. The mounting assembly of claim 2, wherein said anti-slip blocks are located on the upper portion of the back of said solar panel, and it is provided with at least a group of said anti-slip blocks which have the same distance away from the upper edge of said solar panel, and said one group of anti-slip blocks have at least two paralleled anti-slip blocks with the same distance away from the upper edge.

4. The mounting assembly of claim 3, wherein said anti-slip block is provided with a bonding portion, said bonding portion extended from one side to form a pressing portion, and said bonding portion is adhesively coupled with the back of said solar panel, said pressing portion is slidably inserted into the long groove of said beam.

5. The mounting assembly of claim 4, wherein said bonding portion of said anti-slip block is sticked on the back of said solar panel by means of adhesive tape or/and adhesives.

6. The mounting assembly of claim 1, wherein said supporting portion of the beam is provided with a rubber pad.

7. The mounting assembly of claim 1, wherein said pressing block has a pressing portion and a raised portion extended from one side of said pressing portion, and said raised portion has a sunk groove provided to retain said supporting portion of the beam, and said pressing portion is provided with a linking hole run through said raised portion, and said sunk groove of said raised portion is retainably connected to hold the supporting portion of said beam, and said pressing portion is pressed to a side edge of said solar panel, and said pressing block is connected to said beam through the fitting of a bolt and said linking hole.

8. The mounting assembly of claim 1, further comprising a corner brace with a linking portion, wherein said linking portion is bended and extended to form a fixing portion, said linking portion is fixed to said beam with dentate engagement, and said fixing portion is fixed to said installation part outdoors.

9. The mounting assembly of claim 8, wherein the material of said beam, pressing block, anti-slip block and corner brace is aluminium.

10. A method for mounting solar panels, comprising:
(1) providing a plurality of anti-slip blocks and fixing said anti-slip blocks on the back of said solar panel in different position;
(2) providing a plurality of beams and fixing said beams on an installation part outdoors transversely and parallelly;
(3) inserting said anti-slip block which is adhered to said solar panel into the long groove of said beam for loading said solar panel on said beam;
(4) pressing and pushing a pressing block on the side edge of said solar panel and fixing said pressing block to said beam by screw; and
(5) repeating the above steps of (3)-(4) until finishing the installation of a plurality of solar panels.
